(19) Europäisches Patentamt
European Patent Office
Office européen des brevets

(11) **EP 3 521 870 A1**

(12) **EUROPEAN PATENT APPLICATION**
published in accordance with Art. 153(4) EPC

(43) Date of publication:
**07.08.2019 Bulletin 2019/32**

(51) Int Cl.:
**G02B 1/14** (2015.01)     **B32B 7/02** (2019.01)
**B32B 27/20** (2006.01)     **G02B 1/111** (2015.01)
**G02B 5/02** (2006.01)

(21) Application number: **17856391.2**

(22) Date of filing: **28.09.2017**

(86) International application number:
**PCT/JP2017/035359**

(87) International publication number:
**WO 2018/062442 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.09.2016 JP 2016194444**

(71) Applicant: **JNC Corporation**
**Chiyoda-ku**
**Tokyo 100-8105 (JP)**

(72) Inventors:
• **HICHIRI, Kei**
**Ichihara-shi**
**Chiba 290-8551 (JP)**

• **MORIMOTO, Yoshitaka**
**Ichihara-shi**
**Chiba 290-8551 (JP)**
• **HIRAKI, Soichiro**
**Ichihara-shi**
**Chiba 290-8551 (JP)**
• **MIYAUCHI, Hideki**
**Ichihara-shi**
**Chiba 290-8551 (JP)**

(74) Representative: **Becker Kurig Straus**
**Patentanwälte**
**Bavariastrasse 7**
**80336 München (DE)**

(54) **ANTI-GLARE ANTI-REFLECTION HARD COATING FILM, IMAGE DISPLAY DEVICE, AND METHOD FOR PRODUCING ANTI-GLARE ANTI-REFLECTION HARD COATING FILM**

(57)     The present invention is an anti-glare anti-reflection hard coating film which is capable of providing excellent anti-glare properties and anti-reflection properties, while being suppressed in glare if used in various displays, thereby enabling the achievement of good visibility, and which is also applicable as a film for surface protection. An anti-glare anti-reflection hard coating film according to the present invention is provided with: a substrate 10 in the form of a transparent film; and an anti-glare layer 12 and an anti-reflection layer 11, which are sequentially arranged on one surface of the substrate 10 in this order from the substrate 10 side. The anti-glare layer has a thickness of 3-15 $\mu$m; and the anti-reflection layer has a thickness of 50-150 nm. The anti-glare layer is a cured product obtained by curing a resin composition that contains an active energy ray-curable resin; and the resin composition contains silica particles that have a volume average particle diameter of 0.3-0.9 $\mu$m.

Fig. 1

EP 3 521 870 A1

**Description**

**Technical Field**

The invention relates to a film having an anti-glare function and an anti-reflection function, particularly, an anti-glare anti-reflection hard coating film that has visibility improved by suppressing glare, reflected glare, reflection and a cloudiness feeling, and has hard coating properties.

**Background Art**

In an image display device (liquid crystal display, organic EL display, plasma display or the like), if interior illumination (fluorescent lamp or the like) or external light such as sunlight is incident to a display surface, visibility is reduced by reflected glare, reflection and so forth. Accordingly, in order to suppress the reflected glare, the reflection and so forth, the display surface of the image display device is subjected to anti-glare treatment or anti-reflection treatment.

The anti-glare treatment is treatment according to which unevenness is provided on a surface with a layer into which fine particles are incorporated to scatter incident light by the unevenness and the fine particles in the layer. The incident light is diffusely reflected, whereby a reflected image is blurred, and reflected glare of external light or the like is suppressed. However, the unevenness also scatters transmitted light, and therefore such treatment is not suitable for a high-definition image display device.

On the other hand, the anti-reflection treatment is treatment according to which intensity of reflected light is decreased by interference between surface reflected light on an anti-reflection layer and interface reflected light on a lower layer of the anti-reflection layer. Reflection of the incident light is suppressed, whereby contrast, light transmission, the visibility of the image display device, and so forth are improved.

In addition, the display surface of the image display device preferably has scratch resistance, wear resistance and high hardness properties with a higher level.

An anti-glare anti-reflection hard coating film is formed in combination of the anti-glare treatment and the anti-reflection treatment, in which the visibility of the image and the contrast are improved in comparison with a case of an anti-glare layer alone. Moreover, the reflected glare of external light or the like can be suppressed in comparison with a case of the anti-reflection layer alone.

As a method of forming the anti-glare layer on a film, an art of dispersing resin beads or inorganic oxide (silica or the like) having a particle size within a specific range is known (Patent literature No. 1 or 2).

One or a plurality of layers of a low refractive index resin or ultrathin film of an inorganic compound (thickness: several tens to several hundreds of nm) are laminated on the thus formed anti-glare layer, whereby the anti-glare anti-reflection hard coating film is prepared.

The thus prepared anti-glare hard coating film or anti-glare anti-reflection hard coating film has sufficient anti-glare properties. However, Patent literature No. 3 points out that, when a particle size of particles to be dispersed is improper, the visibility of the image display device is reduced by a phenomenon called "glare, " "flickering, " "scintillation," "sparkling" or the like. "Glare" is a phenomenon in which RGB pixels are magnified or brightness becomes uneven by a lens effect of particles or surface unevenness, whereby the visibility of the image display device is reduced. More specifically, a problem of glare cannot necessarily be avoided by the method described in Patent literature No. 1, 2 or the like.

When resolution of the image is small to a certain extent, glare can be suppressed by the invention described in Patent literature No. 3. However, high definition of the image display device has further progressed in recent years, and in the high-definition image display device, it has been found that glare cannot necessarily be suppressed by the method described in Patent literature No. 3. Moreover, in the method described in Patent literature No. 3, a film thickness of the anti-glare layer is required to be suppressed to 2.5 micrometers or less, and hardness (pencil hardness) of a hard coating film has been difficult to ensure. As a measure against the above problem, in Patent literature No. 3, a clear hard coating layer is further provided on the lower layer of the anti-glare layer, but if the number of the layers is increased, a significant increase of production time and production cost poses a problem in turn.

As a measure against glare, Patent Literature No. 4 describes a high-definition anti-glare hard coating film in which "silica particles having an average particle size of 0.5 to 5 micrometers" and "fine particles having an average particle size of 1 to 60 nanometers" are dispersed. The description describes that a function of the fine particles having the average particle size of 1 to 60 nanometers maintains good anti-glare properties, and simultaneously improves transmission visibility. According to Non-patent literature No. 1, fine particles having an average particle size of several tens of nanometers have an effect of preventing deposition and agglomeration of particles larger than the fine particles, and agglomeration of the silica particles having the average particle size of 0.5 to 5 micrometers is suppressed by the above effect, and transmission visibility is presumably improved. However, the above method separately requires a step of dispersing the fine particles having the average particle size of 1 to 60 nanometers, and also when a dispersion liquid is purchased, the dispersion liquid is expensive, and therefore an increase of production time and production cost cannot be avoided.

**Citation List**

**Patent Literature**

Patent literature No. 1: JP H9-269403 A.
Patent literature No. 2: JP 2006-48025 A.
Patent literature No. 3: JP 2009-103734 A.
Patent literature No. 4: JP 2002-036452 A.

**Non-patent Literature**

Non-patent literature No. 1: "Fumed silica (NIPPON AEROSIL CO., LTD.)," Atsushi Morohoshi (2008), Structure, specification and function of various fillers (data collection) (Kakushu filler no kozo, spekku, kino (data shu) in Japanese), p. 100, (edited by) Hiroto Tasaki, TECHNICAL INFORMATION INSTITUTE CO., LTD.

**Summary of Invention**

**Technical Problem**

A film used on a display surface of an image display device requires better anti-glare properties and anti-reflection properties in association with higher performance and higher definition of the image display device. Specifically, the film requires prevention of reflected glare, prevention of glare and resolution of a cloudiness feeling (improvement of contrast) with a higher level, and in a high-definition image display device, prevention of glare is particularly important. However, prevention of reflected glare and prevention of glare have a trade-off relationship to have a problem in which, if one is improved, another is deteriorated.

Accordingly, an object of the invention is to provide an anti-glare anti-reflection hard coating film capable of satisfying both prevention of reflected glare and prevention of glare even in a highly detailed image display device, and providing excellent anti-glare properties and anti-reflection properties without reducing display image quality, having satisfactory visibility when the film is used in various displays, and further capable of being utilized also as a surface protection film.

**Solution to Problem**

The present inventors have diligently continued to conduct examination for solving the problem. As a result, the present inventors have found that, if an average particle size of particles contained in an anti-glare layer, a kind of the particles and a shape of the particles are controlled, both prevention of reflected glare and prevention of glare can be satisfied, and that, if the anti-glare layer and an anti-reflection layer are combined and sequentially laminated to be in the order of a base material, the anti-glare layer and the anti-reflection layer on one surface of a transparent film-shaped base material, a film having further improved visibility by suppressing glare, reflected glare and reflection while suppressing deterioration of image quality, and combined with hard coating properties can be inexpensively obtained, and thus the present inventors have completed the invention.

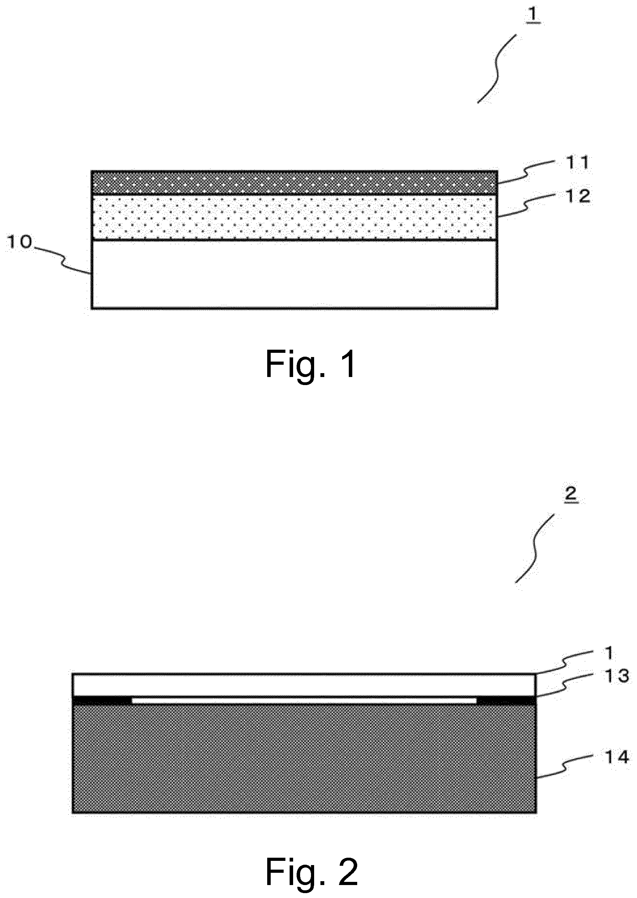

For example, as shown in Fig. 1, an anti-glare anti-reflection hard coating film according to a first aspect of the invention has: a transparent film-shaped base material 10; and one anti-glare layer 12 and one anti-reflection layer 11 in the order from a side of base material 10 on one surface side of base material 10. A thickness of the anti-glare layer is 3 to 15 micrometers, and a thickness of the anti-reflection layer is 50 to 150 nanometers. The anti-glare layer is a cured material prepared by curing a resin composition containing an activated energy ray-curable resin, in which the resin composition contains silica particles having a volume average particle size of 0.3 to 0.9 micrometer.

If the film is thus configured, incident light is diffused by the silica particles contained in the anti-glare layer, and reflected glare can be reduced while suppressing glare. Further, intensity of reflected light can be decreased to reduce glare by interference between surface reflected light on the anti-reflection layer and interface reflected light on a lower layer of the anti-reflection layer. Further, the anti-glare layer is formed of the curable resin, and therefore the anti-glare layer can function as a hard coating layer.

An anti-glare anti-reflection hard coating film according to a second aspect of the invention refers to the anti-glare anti-reflection hard coating film according to the first aspect of the invention, in which the silica particles are amorphous silica particles, and contained in 10% by weight to 50% by weight in the anti-glare layer, haze is 2% to 20%, and luminous reflectance in a wavelength region of 380 nanometers to 780 nanometers is 2.0% or less.

If the film is thus configured, such configuration can provide the anti-glare anti-reflection hard coating film with suitable surface roughness by a preferred particle shape and a preferred particle concentration. Moreover, reflected glare of external light or the like and glare can be suppressed by preferred luminous reflectance. Further, reflected glare and blur of a display image can be suppressed by preferred haze.

An anti-glare anti-reflection hard coating film according to a third aspect of the invention refers to the anti-glare anti-reflection hard coating film according to the first or second aspect of the invention, in which arithmetic average roughness of a surface after forming the anti-glare layer is 0.02 to 0.1 micrometer, arithmetic average roughness of a surface after forming the anti-reflection layer is 0.02 to 0.1 micrometer, and the arithmetic average roughness of the surface after forming the anti-reflection layer is 60% or more of the arithmetic average roughness of the surface after forming the anti-glare layer.

If the film is thus configured, the anti-reflection layer follows the anti-glare layer, whereby interference unevenness due to variation of a film thickness can be suppressed, and simultaneously an anti-reflection effect can be enhanced. Moreover, such a case where the arithmetic average roughness is excessively small and therefore reflected glare cannot be suppressed, or a case where the arithmetic average roughness is excessively large and therefore glare cannot be suppressed are not caused.

An anti-glare anti-reflection hard coating film according to a fourth aspect of the invention refers to the anti-glare anti-reflection hard coating film according to any one of the first to third aspects of the invention, in which the anti-reflection layer includes a fluorine-based resin and metal oxide fine particles having a volume average particle size of 5 to 70 nanometers and bonded with an organic compound having a polymerizable unsaturated group, and a refractive index is 1.25 to 1.38.

If the film is thus configured, a good anti-reflection film as the anti-reflection layer can be formed by a preferred refractive index of the anti-reflection layer. Moreover, the film is formed of the fluorine-based resin, whereby slippage of the surface can be improved to improve scratch resistance of the anti-glare anti-reflection hard coating film. Further, the film contains the metal oxide fine particles having the volume average particle size of 5 to 70 nanometers and bonded with the organic compound having the polymerizable unsaturated group, whereby the anti-reflection layer that compensates for low film strength of the fluorine-based resin and is excellent in scratch resistance can be obtained.

An anti-glare anti-reflection hard coating film according to a fifth aspect of the invention refers to the anti-glare anti-reflection hard coating film according to any one of the first to fourth aspects of the invention, in which the anti-glare anti-reflection hard coating film has a printable layer on the other surface side of the base material.

If the film is thus configured, printability of the anti-glare anti-reflection hard coating film can be improved to provide the film with a design.

An anti-glare anti-reflection hard coating film according to a sixth aspect of the invention refers to the anti-glare anti-reflection hard coating film according to any one of the first to fifth aspects of the invention, in which the anti-glare anti-reflection hard coating film has a sticky layer on the other surface side of the base material. If the film is thus configured, stickiness of the anti-glare anti-reflection hard coating film can be improved to improve convenience in use.

An image display device according to a seventh aspect of the invention has the anti-glare anti-reflection hard coating film according to any one of the first to sixth aspects of the invention on a surface.

If the device is thus configured, the image display device has the film that suppresses glare, reflected glare and reflection and is also combined with the hard coating properties. Accordingly, the visibility and the scratch resistance of a screen can be improved.

A method for producing an anti-glare anti-reflection hard coating film according to an eighth aspect of the invention refers to a method for producing an anti-glare anti-reflection hard coating film, in which an anti-glare layer and an anti-reflection layer are laminated on a transparent film-shaped base material. The method has a step of applying a coating liquid containing a curable resin for forming the anti-glare layer onto one surface side of the transparent film-shaped base material to form a coating film and curing the coating film to laminate the anti-glare layer; and a step of applying a coating liquid containing a curable resin for forming the anti-reflection layer onto the anti-glare layer to form a coating film and curing the coating film to laminate the anti-reflection layer. The anti-reflection layer is cured by being irradiated with ultraviolet light under an atmosphere of an oxygen concentration of 5% or less. A thickness of the anti-glare layer is 3 to 15 micrometers, and a thickness of the anti-reflection layer is 50 to 150 nanometers. The coating liquid of the anti-glare layer has a resin composition containing an activated energy ray-curable resin, and the resin composition contains silica particles having a volume average particle size of 0.3 to 0.9 micrometer.

If the method is thus configured, anti-staining properties of the anti-glare anti-reflection hard coating film can be improved.

**Advantageous Effects of Invention**

An anti-glare anti-reflection hard coating film of the invention is a hard coating film in which good anti-glare properties, anti-reflection properties and glare suppression coexist and hardness is maintained, and can suppress reflected glare and reflection and provide hard coating properties.

**Brief Description of Drawings**

Fig. 1 is a cross-sectional view of anti-glare anti-reflection hard coating film 1 according to a first embodiment of the invention.
Fig. 2 is a view showing a configuration of image display device 2 according to a second embodiment of the invention.
Fig. 3 is a flow diagram showing a method for producing an anti-glare anti-reflection hard coating film according to a third embodiment of the invention.
Fig. 4(a) is a diagram for describing a function of an anti-glare layer. Fig. 4(b) is a diagram for describing a function of an anti-reflection layer.

**Description of Embodiments**

The present application is based on Japanese Patent Application No. 2016-194444 filed on September 30 in 2016 in Japan, and is hereby incorporated by reference in its entirety in the present application. The invention can be further completely understood by the following detailed description. A further application scope of the invention will become apparent by the detailed description described below. However, the detailed description and a specific embodiment are desirable embodiments of the invention, and described only for illustrative purposes because various possible changes and modifications will be apparent to those having ordinary skill in the art on the basis of the detailed description within spirit and the scope of the invention. The applicant has no intention to dedicate to the public any described embodiment, and among the modifications and alternatives, those which may not literally fall within the scope of the present claims constitute a part of the invention in the sense of the doctrine of equivalents.

Hereinafter, an embodiment of the invention will be described with reference to drawings. In addition, in each Figure, an identical or similar sign is placed on a part identical or corresponding to each other, and overlapped description is omitted. Moreover, the invention is not limited by the embodiments described below.

In the invention, a coating liquid contains a curable resin, and may contain only the curable resin or a mixture of the curable resin and a solvent.

**Anti-glare anti-reflection hard coating film 1**

Anti-glare anti-reflection hard coating film 1 according to a first embodiment of the invention (hereinafter, also described as film 1 in several cases) will be described with reference to Fig. 1. In addition, Fig. 1 is a diagram for describing a layer configuration of film 1 configured in a multilayer, and a thickness of each layer is exaggerated. Anti-glare anti-reflection hard coating film 1 has transparent film-shaped base material 10, anti-reflection layer 11 and anti-glare layer 12. As shown in Fig. 1, anti-glare layer 12 and anti-reflection layer 11 are laminated in the order on one surface of transparent film-shaped base material 10 (upper side of base material 10 in Fig. 1) .

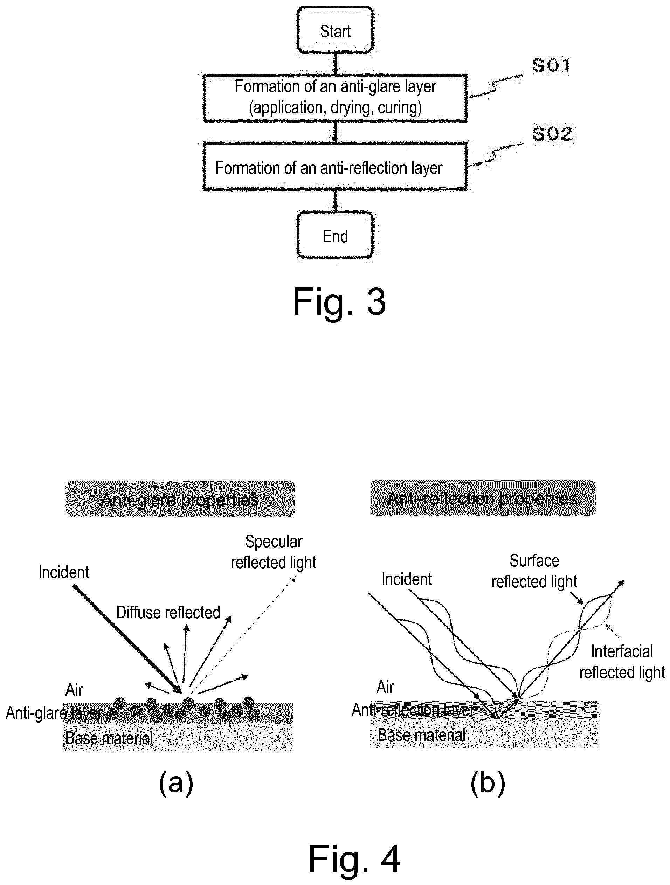

As shown in Fig. 4(a), the anti-glare layer has a function of diffusing incident light by particles contained therein and surface unevenness to reduce glare of reflected light.

As shown in Fig. 4(b), the anti-reflection layer has a function of decreasing intensity of reflected light to reduce glare by interference between surface reflected light on the anti-reflection layer and interface reflected light on a lower layer (base material in Fig. 4(b)).

The anti-glare anti-reflection hard coating film of the application suppresses glare, reflected glare and reflection by combination of the anti-glare layer and the anti-reflection layer, and simultaneously has hard coating properties.

**Base material 10**

Various film-shaped plastics or glasses having transparency can be used in base material 10. Specific examples of a material of the plastic film having transparency include a resin such as a polyester-based resin, an acetate-based resin, a polyether sulfone-based resin, a polycarbonate-based resin, a polyamide-based resin, a polyimide-based resin, a polyolefin-based resin, a (meth)acrylic-based resin, a polyvinyl chloride-based resin, a polyvinylidene chloride-based resin, a polystyrene-based resin, a polyvinyl alcohol-based resin, a polyarylate-based resin, a polyphenylene sulfide-based resin and a norbornene-based resin. Specifically, polyethylene terephthalate (PET), polyethylene naphthalate (PEN), triacetyl cellulose (TAC), polyether sulfone, polycarbonate (PC), polyarylate, polyetheretherketone, a cycloolefin polymer (COP), a cycloolefin copolymer (COC), a PMMA-PC laminated film or the like is preferred. In addition, polyethylene terephthalate and polyethylene naphthalate are excellent in mechanical strength, dimensional stability, heat resistance, chemical resistance, optical characteristics, and so forth, and smoothness on a film surface and handling properties, and therefore further preferred. Polycarbonate is excellent in transparency, impact resistance, heat resistance, dimensional stability and flammability, and therefore further preferred. Triacetyl cellulose is small in optical anisotropy, and therefore further preferred. Polyethylene terephthalate is particularly preferred in consideration of cost and availability.

A film thickness of base material 10 is preferably 50 to 500 micrometers, and further preferably 80 to 300 micrometers. If the film thickness of base material 10 is 50 micrometers or more, the mechanical strength of the base material is sufficient, and each layer can be easily formed in the base material. Moreover, if the film thickness is 500 micrometers or less, a thickness of anti-glare anti-reflection hard coating film 1 is not excessively large, and a product using the film (for example, an image display device as described later) is compact.

**Anti-glare layer 12**

As shown in Fig. 1, anti-glare layer 12 is formed by applying a coating liquid of a resin composition containing fine particles and a curable resin onto transparent film-shaped base material 10 and curing the resulting coating film. A wet coating method in which the coating liquid is uniformly coated is preferably used for lamination of anti-glare layer 12. As the wet coating method, a bar coating method, a gravure coating method, a die coating method or the like can be used.

The gravure coating method is a method in which a gravure roll subjected to uneven engraving on a surface is immersed into the coating liquid, and the coating liquid deposited in an uneven portion on the surface of the gravure roll is scraped off with a doctor blade and accumulated in a concave portion to be accurately measured and transferred to the base material. A liquid with low viscosity can be coated thinly by the gravure coating method.

The die coating method is a method in which the coating liquid is coated thereon while the liquid is pressurized and extruded from an application head called a die. Coating with high precision can be performed by the die coating method. Further, the liquid is not exposed to outside air during application, and therefore a change in a coating liquid concentration by drying, or the like is hard to occur.

Specific examples of other wet coating methods include a spin coating method, a reverse coating method, a roll coating method, a slit coating method, a dipping method, a spray coating method, a kiss coating method, a reverse kiss coating method, an air knife coating method, a curtain coating method and a rod coating method. A method of lamination can be appropriately selected from the above methods according to the film thickness to be required.

The wet coating method is used, whereby the anti-glare layer can be laminated at a line speed of tens of meters per minute (for example, about 20 m/min) and in a large area, and therefore the anti-glare layer can be produced in a large amount, and production efficiency can be improved.

Here, the curable resin means activated energy ray-curable resin crosslinked by irradiation with activated energy rays such as $\alpha$ rays, $\beta$ rays, $\gamma$ rays, neutron beams, electron beams, and ultraviolet light, or a thermosetting resin crosslinked by heating. Specific examples of the curable resin include a silicone resin, an acrylic resin, a methacrylic resin, an epoxy resin, a melamine resin, a polyester resin and a urethane resin. Among the above curable resins, from a viewpoint of productivity, an ultraviolet curing resin from which the film is formed and cured by irradiation with ultraviolet light in a short period of time is preferred. The ultraviolet curing resin is ordinarily used by adding a photopolymerization initiator. Specific examples of the photopolymerization initiator include various benzoin derivatives, benzophenone derivatives or phenyl ketone derivatives. An amount of addition of the photopolymerization initiator is preferably adjusted to 1 to 10% by weight based on 100% by weight of the ultraviolet curing resin. If the amount is 1% by weight or more, poor curing is hard to occur, and if the amount is 10% by weight or less, coloring or the like is hard to be caused. In addition, the curable resin is used in a state of the coating liquid in order to perform coating. Therefore, the curable resin is preferably in a liquid state. When the curable resin is solid, the curable resin should be used by dissolving the curable resin in a solvent.

A concentration of the curable resin in the coating liquid can be selected so as to satisfy viscosity according to a laminating method such as the wet coating method in the viscosity of the coating liquid. The concentration is preferably 1 to 80% by weight, and further preferably, 2 to 60% by weight. The concentration of the curable resin in the coating liquid can be adjusted by using a solvent such as methyl ethyl ketone, methyl isobutyl ketone, propylene glycol monomethyl ether and propylene glycol monomethyl ether acetate. Moreover, publicly-known other additives, such as a leveling agent including a surfactant, may be added to the coating liquid, when necessary. If the leveling agent is added thereto, surface tension of the coating liquid can be controlled, and a surface defect such as cissing and cratering to be caused during layer formation can be suppressed.

Specific examples of curing treatment for curing the curable resin include curing treatment such as heating, irradiation with ultraviolet light and irradiation with electron beams. In addition, when the coating film contains the solvent, the curing treatment is performed preferably after removing the solvent remaining in the coating film ordinarily by heating the coating film within the range of 50 to 200°C for tens of seconds to several minutes. For example, as curing by heating, the coating film only needs to be heated ordinarily at a temperature of 180 to 250°C, and preferably at a temperature of 200 to 250°C. Then, the coating film only needs to be heated for 30 to 90 minutes when an oven is used, or for 5 to 30 minutes when a hot plate is used. Moreover, as curing by irradiation with ultraviolet light, the coating film only needs to be irradiated with ultraviolet light having a wavelength of 200 to 400 nanometers for a short period of time (within the range of several seconds to tens of seconds) from a UV lamp (for example, a high pressure mercury lamp, an ultra-high pressure mercury lamp, a metal halide lamp, a high power metal halide lamp). Moreover, as curing by irradiation with electron beams, the coating film only needs to be irradiated with low energy electron beams from a self-shielding type low energy electron accelerator of 300 keV or less.

Into anti-glare layer 12, silica (silicon oxide) particles are incorporated so that anti-glare layer 12 after curing may diffuse incident light. In addition, organic or inorganic fine particles may be further incorporated thereinto for adjustment of a refractive index of anti-glare layer 12 or providing the layer with conductivity. More specifically, organic fine particles and inorganic oxide fine particles can be used.

Specific examples of the organic fine particles incorporated into the anti-glare layer include acrylic resin fine particles, acrylic-styrene resin fine particles, polystyrene resin fine particles, polyurethane resin fine particles, epoxy resin fine particles, polyethylene resin fine particles, benzoguanamine resin fine particles and melamine resin fine particles. The fine particles may be used in one kind, or in combination of two or more kinds.

Specific examples of the inorganic oxide fine particles incorporated into the anti-glare layer include silicon oxide, aluminum oxide (alumina), zirconium silicate, rutile type titanium dioxide, tin oxide, zirconium oxide, cerium oxide, magnesium fluoride, iron oxide, zinc oxide, copper oxide, antimony oxide, cryolite, fluorite, apatite, calcite, gypsum and talc. The inorganic oxide fine particles are preferably silicon oxide, aluminum oxide, zirconium oxide, zirconium silicate, rutile type titanium dioxide, tin oxide, cerium oxide, magnesium fluoride and iron oxide, and further preferably rutile type titanium dioxide or zirconium oxide having a large refractive index, doped tin oxide that can provide the layer with conductivity, inexpensive aluminum oxide and silicon oxide. The inorganic oxide fine particles may be used in one kind, or in combination of two or more kinds.

A content of the silica particles is preferably 10 to 50% by weight, and further preferably 15 to 25% by weight in the anti-glare layer. In order to develop good anti-glare properties, the content is preferably 10% by weight or more, and in order to maintain good adhesion with the base material, the content is preferably less than 50% by weight.

A volume average particle size of the silica particles is preferably 0.3 to 0.9 micrometer, and in consideration of transparency of the coating film, the volume average particle size is preferably 0.4 to 0.7 micrometer. If the volume average particle size is 0.3 micrometer or more, incident light can be sufficiently diffused, and if the volume average particle size is 0.9 micrometer or less, glare (flickering) can be sufficiently suppressed. In addition, the volume average particle size of the fine particles has been measured by using Laser Diffraction/Scattering Particle Size Distribution Analyzer (LA-950V2, made by HORIBA, Ltd.). Information on the volume average particle size to be provided by a material manufacturer can also be utilized, and a slight difference in a particle size value should be permitted as a machine difference.

Specific examples of a shape of the silica particles include a spherical shape, a hollow shape, a porous shape, a rod-like shape (referring to a shape in which an aspect ratio is more than 1 and 10 or less), a plate shape, a fibrous shape or an amorphous shape, and silica particles having the amorphous shape are preferred. If amorphous particles are used, unevenness can be effectively provided on the surface of the coating film.

Thus, the fine particles are added to anti-glare layer 12, and therefore anti-glare layer 12 having desired anti-glare properties can be easily obtained by adjusting a kind or an amount of the fine particles.

A refractive index of anti-glare layer 12 is 1.45 to 1.58, and preferably 1.48 to 1.52. If the refractive index is 1.45 or more, a difference in the refractive index from anti-reflection layer 11 described later is not excessively small, and reflection and reflected glare can be sufficiently prevented. On the other hand, if the refractive index of anti-glare layer 12 is 1.58 or less, the anti-glare layer can be formed based on acrylic resin or the like, and sufficient hardness can be ensured.

A film thickness of anti-glare layer 12 is 3 to 15 micrometers, preferably 3 to 8 micrometers, and particularly preferably 4 to 6 micrometers. If the film thickness is 3 micrometers or more, sufficient pencil hardness can be obtained. If the film thickness is 15 micrometers or less, curling of a cured film by tensile stress can be suppressed.

**Anti-reflection layer 11**

As shown in Fig. 1, anti-reflection layer 11 is formed by applying a coating liquid of a resin composition containing the curable resin onto anti-glare layer 12 and curing the resulting coating film. As a kind of the curable resin used in anti-reflection layer 11, a laminating method of the curable resin and a curing treatment method thereof, the kind of the curable resin, the laminating method thereof and the curing method thereof as described in anti-glare layer 12 can be used. In addition, the kind of the curable resin used in anti-reflection layer 11 and the kind of curable resin used in anti-glare layer 12 may be identical to or different from each other. If the curable resin identical thereto is used, the identical material can be used, and therefore productivity can be improved. If the curable resin different therefrom is used, a width of a selectable refractive index is increased, and therefore the refractive index can be easily adjusted. In particular, in the case of the anti-reflection layer, the refractive index is preferably decreased by a technique of dispersing hollow silica, and using a fluorine-based resin or the like.

A film thickness of anti-reflection layer 11 is 50 to 150 nanometers, preferably 70 to 110 nanometers, and further preferably 80 to 100 nanometers. If the film thickness of the anti-reflection layer is 50 to 150 nanometers, a wavelength at which reflectance becomes a minimum can be adjusted in the vicinity of a middle (550 nanometers) of the wavelength of visible light, and therefore luminous reflectance can be significantly decreased. Moreover, if the film thickness of the anti-reflection layer is 50 nanometers or more, reflected light can be avoided from becoming yellow. If the film thickness of the anti-reflection layer is 150 nanometers or less, the reflected light can be avoided from becoming blue, and a surface of the anti-reflection layer is not excessively smoothened, and therefore anti-glare properties can be maintained.

A refractive index of anti-reflection layer 11 is 1.25 to 1.38, and preferably 1.30 to 1.38. If the refractive index is 1.25 or more, an amount of addition of an inorganic substance (such as hollow silica) is excessively increased and a ratio of the curable resin is relatively decreased, whereby strength of a curable resin layer can be avoided from becoming insufficient. Alternatively, when a mixture containing the fluorine-based resin is used as the curable resin, an amount of the fluorine-based resin is excessively increased, whereby the strength of the curable resin layer can be avoided from becoming insufficient. If the refractive index is 1.38 or less, a difference in the refractive index from the anti-glare layer 12 described above is small, and incapability of preventing reflection and reflected glare can be sufficiently prevented. In addition, the refractive index of anti-reflection layer 11 should be essentially adjusted to be smaller than the refractive index of anti-glare layer 12.

As one embodiment of anti-reflection layer 11, a photocurable and low refractive index resin composition containing the following can be used:

(A) metal oxide fine particles bonded with an organic compound having a polymerizable group;
(B) a fluorine-containing polymer and a monomer having a polymerizable group;
(C) a (meth)acrylic monomer;
(D) a photopolymerization initiator; and
(E) a solvent.

As the photocurable and low refractive index resin composition, a commercial item may be purchased and used, or components of (A) to (E) described above may be mixed and used. As the commercial item, TU-2361 and TU-2360 (both, made by JSR Corporation) can be utilized.

The metal oxide fine particles bonded with the organic compound having the polymerizable group (A) are particles in which metal oxide fine particles (A1) are bonded with the organic compound containing the polymerizable group (A2). A term "bond" may be a covalent bond or a noncovalent bond such as physical adsorption. As slurry of the metal oxide particles modified with a polymerizable organic compound, ORGANOSILICASOL PGM-AC-2140Y and PGM-AC-4130Y (both, made by Nissan Chemical Industries, Ltd.), ADMANANO YA010C-SM1 and YA050C-SM1 (both, made by Admatechs Company Limited) or the like can be utilized.

As the fluorine-containing polymer and the monomer having the polymerizable group, DEFENSA OP-3803 (made by DIC Corporation), low refractive index fluorine monomers LINC-202UA and LINC-152EPA (both, made by Kyoeisha Chemical Co., Ltd.), or the like can be utilized. As the (meth)acrylic monomer (C), the photopolymerization initiator (D) and the solvent €, materials similar to the materials used in preparation of the anti-glare layer can be utilized.

Specific examples of the metal oxide fine particles (A1) include particles of titanium oxide, silica, alumina, zirconia, zinc oxide, germanium oxide, indium oxide, tin oxide, antimony-containing tin oxide (ATO), tin-containing indium oxide (ITO), antimony oxide or cerium oxide. In particular, amorphous silica is preferred for the reason of high hardness and ease of adjustment of the refractive index to a low level.

A volume average particle size of the metal oxide fine particles (A1) is preferably 5 nanometers to 70 nanometers, and in consideration of the thickness after curing, the volume average particle size is preferably 30 nanometers to 60 nanometers.

A shape of the metal oxide fine particles (A1) is a spherical shape, a hollow shape, a porous shape, a rod-like shape (referring to a shape in which an aspect ratio is more than 1 and 10 or less), a plate shape, a fibrous shape or an amorphous shape, and preferably a spherical shape an amorphous shape or a rod-like shape, capable of providing coating film strength, or a hollow shape capable of decreasing the refractive index.

A content of (A) described above is preferably 10 to 80% by weight, and further preferably 20 to 60% by weight, in the anti-reflection layer. In order to develop a function of (A), the content is preferably 10% by weight or more, and in order to maintain the coating film strength and good adhesion to the lower layer, the content is preferably 80% by weight or less. A content of the photopolymerization initiator (D) is preferably 0.1 to 10% by weight in the anti-reflection layer. If the content is 0.1% by weight or more, poor curing is hard to occur, and if the content is 10% by weight or less, coloring or the like is hard to be caused. A content of the solvent (E) is preferably 80% by weight to 99% by weight based on the total amount of the coating liquid. If the content is 80% by weight or more, viscosity of the coating liquid is not excessively large, and therefore a uniform thin film of tens to hundreds of nanometers can be formed, and if the content is 99% by weight or less, the viscosity of the coating liquid is not excessively small, and therefore the uniform thin film of tens to hundreds of nanometers can be formed.

**Anti-glare anti-reflection hard coating film**

In the anti-glare anti-reflection hard coating film, the luminous reflectance in a wavelength region of 380 nanometers to 780 nanometers is preferably 2.0% or less, and further preferably 1.2% or less. If the luminous reflectance is in the range thereof, reflected glare, or glare of external light can be further suppressed.

Further, haze of the anti-glare anti-reflection hard coating film is preferably 2% to 20%, and further preferably 3% to 10%. If the haze is 2% or more, the reflected glare can be further suppressed. If the haze is 20% or less, a display image can be prevented from being blurred.

In the anti-glare anti-reflection hard coating film, arithmetic average roughness of a surface of the anti-glare layer after forming the anti-glare layer is preferably adjusted to 0.02 to 0.1 micrometer, and arithmetic average roughness of the surface of the anti-reflection layer after forming the anti-reflection layer is preferably adjusted to 0.02 to 0.1 micrometer, and arithmetic average roughness of the surface after forming the anti-reflection layer is preferably 60% or more of arithmetic average roughness of a surface before forming the anti-reflection layer, and further preferably 80% or more thereof. If the arithmetic average roughness is in the range, the anti-reflection layer is easily allowed to follow unevenness of the surface of the anti-glare layer, and therefore interference unevenness due to variation of the film thickness can be suppressed, and simultaneously the anti-reflection effect can be enhanced. Moreover, if the arithmetic average roughness is 0.02 micrometer or more, reflected glare can be suppressed, and if the arithmetic average roughness is smaller than 0.1 micrometer, glare can be suppressed.

The anti-glare anti-reflection hard coating film may have a functional layer on the other surface side of the base material without the anti-glare layer and the anti-reflection layer. Specific examples thereof include a printable layer. The printable layer is formed of the curable resin, and an acrylic compound having at least one of a hydroxyl group, a carboxyl group, a polyethylene glycol chain and a polypropylene glycol chain. In addition, according to a functional group (or polymer chain) contained in the curable resin, the printable layer preferably has surface free energy of 30 to 50 mN/m, and preferably of 35 to 45 mN/m. Ink used for printing does not matter in particular. A refractive index of the printable layer is 1.30 to 1.70, and preferably 1.40 to 1.60. A film thickness of the printable layer is 0.5 to 5.0 micrometers, and preferably 2.0 to 4.0 micrometers. The anti-glare anti-reflection hard coating film that prevents reflection and reflected glare and has printability is formed by having the printable layer.

The anti-glare anti-reflection hard coating film may further have a sticky layer on the other surface side of the base material without the anti-glare layer and the anti-reflection layer. The sticky layer is not particularly limited if stickiness of the anti-glare anti-reflection hard coating film is improved.

**Image display device 2**

Image display device 2 according to a second embodiment of the invention will be described with reference to Fig. 2. Image display device 2 has anti-glare anti-reflection hard coating film 1 according to the invention, and image panel 14 for displaying an image displayed by mechanical treatment. Specific examples of image panel 14 include a liquid crystal display, an organic EL display and a plasma display. As shown in Fig. 2, anti-glare anti-reflection hard coating film 1 is placed on image panel 14 for anti-reflection layer 11 (see Fig. 1) to be upward.

In addition, in Fig. 2, window frame 13 of the display is exaggerated, and therefore space is present in a center part of image display device 2, namely between anti-glare anti-reflection hard coating film 1 and image panel 14, but anti-glare anti-reflection hard coating film 1 is actually placed on image panel 14 in being adhered thereon.

**Method for producing anti-glare anti-reflection hard coating film**

A method for producing an anti-glare anti-reflection hard coating film according to a third embodiment of the invention will be described with reference to Fig. 3. First, a coating liquid is applied onto one surface of transparent film-shaped base material 10 by using the wet coating method, and when a solvent is contained, the coating liquid is dried, and then the resulting coating film is cured, whereby anti-glare layer 12 is laminated (S01). Next, the coating liquid is applied onto a surface of anti-glare layer 12 on a side opposite to base material 10 using the wet coating method, and when the solvent is contained, the coating liquid is dried, and then the resulting coating film is cured, whereby anti-reflection layer 11 is laminated (S02). In addition, upon curing anti-reflection layer 11, an oxygen concentration is preferably adjusted to 5% or less by nitrogen purging. If the oxygen concentration is 5% or less, excellent anti-fouling properties can be added when the fluorine-based resin is used.

Moreover, the method for producing the anti-glare anti-reflection hard coating film may further have: a step of adjusting a concentration of a resin in the coating liquid, or the like in order to adjust the film thickness of anti-reflection layer 11 to a desired film thickness; and a step of adjusting a kind or an amount of inorganic oxide in order to adjust the haze of anti-glare layer 12 to desired haze.

## Examples

Hereinafter, the invention will be described in detail by way of Examples. However, the invention is not limited to the content described in Examples described below.

First, a method for measuring various physical properties or the like is described.

## Particle size

A particle size of fine particles was measured using Laser Diffraction/Scattering Particle Size Distribution Analyzer (LA-950V2, made by HORIBA, Ltd.). A coating liquid after preparation was diluted with propylene glycol monomethyl ether, and the resulting mixture was measured to obtain a volume average particle size and a particle size distribution. When the volume average particle size and the particle size distribution provided by a manufacturer of fine particles were available, values provided were used. In addition, in the laser diffraction/scattering particle size distribution analyzer, when the particles have no spherical shape, the particle size is determined as a particle size of spherical particles having light scattering characteristics equivalent to light scattering characteristics of particles to be measured.

## Particle shape

A particle shape was confirmed by using a scanning electron microscope (SEM) (SU-70, made by Hitachi High-Technologies Corporation). In addition, in order to prevent a sample from being electrostatically charged by electron beams, the sample is coated with a platinum sputter film before observation using SEM to provide a surface of the sample with conductivity.

## Luminous reflectance

An absolute specular reflectance spectrum having a wavelength in the range of 380 nm to 780 nm was measured by using Thickness Monitor (FE-3000, made by Otsuka Electronics Co., Ltd.), and luminous reflectance (stimulus value Y) was calculated based on the following equations.

**Equation 1**

$$Y = K \int_{380}^{780} [S(\lambda) \cdot y(\lambda) \cdot R(\lambda)] d\lambda$$

**Equation 2**

$$K = \frac{100}{\int_{380}^{780} [S(\lambda) \cdot y(\lambda)] d\lambda}$$

In the equations, $\lambda$ represents a wavelength (nm) of visible light, S ($\lambda$) is light of D65 light source defined by CIE, y($\lambda$) is a color-matching function at a 2-degree visual field defined by CIE, and R($\lambda$) is absolute specular reflectance measured by the Thickness Monitor.

**Film thickness**

An absolute reflectance spectrum was measured by using Thickness Monitor (FE-3000, made by Otsuka Electronics Co., Ltd.). An actually measured value of absolute reflectance and a theoretical formula were used, a film thickness was applied as a fitting parameter, and the film thickness was determined by a method of least squares.

**Refractive index**

A thin film was prepared on a glass substrate by spin coating, and dried in an oven, and then irradiated with ultraviolet light to obtain a cured film for refractive index measurement. A thickness of the cured film was measured by using Surface Profiler (Alpha-Step IQ, made by KLA-Tencor Corporation). Further, an absolute reflectance spectrum of the cured film was measured by using Thickness Monitor (FE-3000, made by Otsuka Electronics Co., Ltd.). An actually measured value of absolute reflectance and a theoretical formula were used, a refractive index was applied as a fitting parameter contrary to the time in which the film thickness was measured, and the refractive index was determined by the method of least squares. The refractive index had dependence on light wavelength, but as a value thereof, 589 nm was used.

**Total luminous transmittance**

Total luminous transmittance was measured using Haze Meter (NDH-5000SP, made by Nippon Denshoku Industries Co., Ltd.) in accordance with JIS K 7361-1.

**Haze**

Haze was measured using Haze Meter (NDH-5000SP, made by Nippon Denshoku Industries Co., Ltd.) in accordance with JIS K 7136.

**Gloss**

Gloss at an incident angle of 60° was measured using Gloss Meter (VG-7000, made by Nippon Denshoku Industries Co., Ltd.) in accordance with JIS Z 8741. In addition, in order to prevent reflection of measurement light from a side (film rear surface) opposite to a surface on which an anti-glare layer and an anti-reflection layer of a film were formed, a black PET film (NE-B50S+, made by Nichieikako Co., Ltd.) was attached on the film rear surface, and then the gloss was measured.

**Glare (flickering)**

An anti-glare anti-reflection hard coating film was adhered on a liquid crystal display (264 ppi, iPad (registered trademark) third generation, A1416), and glare (flickering) was compared by visual observation. The results were judged as described below.
Excellent: Almost no glare was observed.
Good: Glare was observed upon closer inspection, but below human awareness.
Marginal: Glare was observed to slightly reduce visibility of a screen.
Poor: Glare was observed to significantly reduce visibility of a screen.

**Reflected glare**

In order to prevent reflection of measurement light from the side (film rear surface) opposite to the surface on which the anti-glare layer and the anti-reflection layer of the film were formed, the black PET film (NE-B50S+, made by Nichieikako Co., Ltd.) was attached on the film rear surface. Then, the film was attached onto a glass plate so as not to cause curling on the film, own face was reflected thereon as in a mirror, and reflected glare was compared by visual observation. The results were judged as described below.
Excellent: A contour of own face was indistinguishable.
Good: A contour of own face was blurred.
Marginal: A contour of own face was able to confirmed upon closer inspection.
Poor: A contour of own face was able to clearly confirmed.

**Glare of external light**

In order to prevent reflection of measurement light from the side (film rear surface) opposite to the surface on which the anti-glare layer and the anti-reflection layer of the film were formed, the black PET film (NE-B50S+, made by Nichieikako Co., Ltd.) was attached onto the film rear surface. Then, the film was attached to a glass plate so as not to cause curling on the film, a fluorescent lamp was reflected, and glare was compared by visual observation. The results were judged in four levels as described below.

Excellent: The fluorescent lamp was not glared.

Good: The fluorescent lamp was felt to be slightly glared.

Marginal: The fluorescent lamp was felt to be glared.

Poor: The fluorescent lamp was felt to be significantly glared.

**Cloudiness feeling**

In order to prevent reflection of measurement light from the side (film rear surface) opposite to the surface on which the anti-glare layer and the anti-reflection layer of the film were formed, the black PET film (NE-B50S+, made by Nichieikako Co., Ltd.) was attached onto the film rear surface. Then, the film was attached onto a glass plate so as not to cause curling on the film. Blackness of the black PET film viewed through the film and blackness of the black PET film viewed without passing through the film were compared by visual observation. The results were judged in four levels described below.

Excellent: Blackness of the black PET film was equivalent between the case through the film and the case without passing through the film.

Good: The black PET film viewed through the film was felt to be slightly whiter than the black PET film viewed without passing through the film.

Marginal: The black PET film viewed through the film was felt to be whiter than the black PET film viewed without passing through the film.

Poor: The black PET film viewed through the film was felt to be significantly whiter than the black PET film viewed without passing through the film.

**Pencil hardness**

Pencil hardness was measured using scratch hardness (pencil method) tester (KT-VF2380, made by Kotec Ltd.) in accordance with JIS K 5600-5-4 (load: 750 g).

**Surface roughness**

Arithmetic average roughness Ra was measured using Surface Profiler (Alpha-Step IQ, made by KLA-Tencor Corporation) in accordance with JIS B 0651.

Next, a method for preparing a photocurable resin composition (coating liquid) for forming the anti-glare layer is described.

**• Preparation of photocurable resin composition (coating liquid) A**

Then, 30. 5% by weight of a mixture of an acrylic acid ester oligomer and a monomer having photopolymerizability, 1.6% by weight of a photopolymerization initiator, 8.5% by weight of silica fine particles, and 59.4% by weight of propylene glycol monomethyl ether were mixed, and the resulting mixture was stirred using Disper, and then the silica fine particles were dispersed using a bead mill, and subjected to filtration with a filter to obtain a photocurable resin composition. A volume average particle size of the silica fine particles in the photocurable resin composition obtained was measured using the Laser Diffraction/Scattering Particle Size Distribution Analyzer. The volume average particle size of the silica fine particles was 0.6 μm. When a particle shape was confirmed by SEM after preparing a thin film, a shape of the silica particles contained in photocurable resin composition A was amorphous.

**• Preparation of photocurable resin composition (coating liquid) B**

A mixture of an acrylic acid ester oligomer having photopolymerizability and a monomer, a photopolymerization initiator and a propylene glycol monomethyl ether were further added to photocurable resin composition (coating liquid) A to decrease a concentration of silica fine particles. A composition of photocurable resin composition (coating liquid) B is shown in Table 1.

### • Preparation of photocurable resin composition (coating liquid) C

Then, 32.6% by weight of a mixture of an acrylic acid ester oligomer and a monomer having photopolymerizability, 1.6% by weight of a photopolymerization initiator, 6.2% by weight of silica fine particles, and 59.6% by weight of propylene glycol monomethyl ether were mixed, and the resulting mixture was stirred using Disper, and then the silica fine particles were dispersed using a bead mill, and subjected to filtration with a filter to obtain a photocurable resin composition. A volume average particle size of the silica fine particles in the photocurable resin composition obtained was measured using the Laser Diffraction/Scattering Particle Size Distribution Analyzer. The volume average particle size of the silica fine particles was 1.2 $\mu$m. When a particle shape was confirmed by SEM after preparing a thin film, a shape of the silica particles contained in photocurable resin composition C was amorphous.

### • Preparation of photocurable resin composition (coating liquid) D

Then, 31.7% by weight of a mixture of an acrylic acid ester oligomer and a monomer having photopolymerizability, 1.6% by weight of a photopolymerization initiator, 5.60 by weight of true spherical silica fine particles (ADMAFINE SC2500-SMJ, a volume average particle size of 0.5 $\mu$m, made by Admatechs Company Limited), and 61.1% by weight of propylene glycol monomethyl ether were mixed, and the resulting mixture was stirred using Disper to obtain photocurable resin composition D. When a particle shape was confirmed by SEM after preparing a thin film, a shape of the silica particles contained in photocurable resin composition D was spherical.

### • Preparation of photocurable resin composition (coating liquid) E

Then, 31.7% by weight of a mixture of an acrylic acid ester oligomer and a monomer having photopolymerizability, 1.6% by weight of a photopolymerization initiator, 5.6% by weight of acrylic resin fine particles (ENEOS Unipowder submicron grade, a volume average particle size of 0.5 $\mu$m, made by JX Energy Corporation), and 61.1% by weight of propylene glycol monomethyl ether were mixed, and the resulting mixture was stirred using Disper to obtain photocurable resin composition E. When a particle shape was confirmed by SEM after preparing a thin film, a shape of the silica particles contained in photocurable resin composition E was spherical.

### • Preparation of photocurable resin composition (coating liquid) F

Then, 33.4% by weight of a mixture of an acrylic acid ester oligomer and a monomer having photopolymerizability, 1.6% by weight of a photopolymerization initiator, and 65% by weight of propylene glycol monomethyl ether were mixed, and the resulting mixture was stirred using Disper to obtain photocurable resin composition F.

Compositions of coating liquids A to F are shown in Table 1. In addition, a blending ratio of fine particles was adjusted to be 2 to 10% in haze after preparing the anti-glare anti-reflection hard coating film.

Table 1

## Table 1 Photocurable resin composition (coating liquid)

| | | | Photopolymerizable resin composition (coating liquid) | | | | | |
| | | | A | B | C | D | E | F |
|---|---|---|---|---|---|---|---|---|
| Fine particles | | Kind | Silica | | | | Acrylic | None |
| | | Shape | Amorphous | | | Spherical | | - |
| | | Average particle size / μm | 0.6 | | 1.2 | 0.5 | 0.5 | - |
| Composition (wt%) | | Photopolymerizable acrylic acid ester oligomer and monomer | 30.5 | 31.2 | 32.6 | 31.7 | 31.7 | 33.4 |
| | | Fine particles | 8.5 | 7.8 | 6.2 | 5.6 | 5.6 | 0 |
| | | Photopolymerization initiator | 1.6 | 1.6 | 1.6 | 1.6 | 1.6 | 1.6 |
| | | Propylene glycol monomethyl ether | 59.4 | 59.4 | 59.6 | 61.1 | 61.1 | 65 |

Further, a method for preparing a photocurable and low refractive index resin composition (coating liquid) for forming the anti-reflection layer is described.

### • Preparation of photocurable and low refractive index resin composition (coating liquid) G

Then, 25% by weight of a photocurable and low refractive index resin composition (TU-2361, made by JSR Corporation), which was a mixture of an ethylenic unsaturated group-containing fluorine-containing polymer, metal oxide fine particles bonded with an organic compound having a polymerizable unsaturated group, a (meth)acrylic monomer, a photopolymerization initiator, a solvent and the like, was diluted with 75% by weight of a solvent, and the resulting material was taken as photocurable and low refractive index resin composition (coating liquid) G. When a volume average particle size of the metal oxide fine particles (silica) was measured using the Laser Diffraction/Scattering Particle Size Distribution Analyzer, the volume average particle size was 47 nm.

### Example 1

### • Translucent base material

As a translucent base material, a 125 μm-thick polyethylene terephthalate (PET) film subjected to easy adhesion processing on both surfaces (Tetoron KEL86W, made by Teijin Dupont Film Japan Limited) was used.

### • Formation of anti-glare layer

Photocurable resin composition (coating liquid) A was applied onto the base material described above to be 4 to 5 μm in an average film thickness after drying, by using a bar coater, and then dried at a temperature of 85°C for 2 minutes in an oven. Then, the resulting material was photocured at an irradiation amount of 300 mJ/cm$^2$ by using a high pressure mercury lamp to form an anti-glare layer.

A refractive index of the layer containing fine particles having a particle size more than 100 nm is hard to be measured by the method described in the present description. A refractive index (at 589 nm) of a resin only in the anti-glare layer is 1.52, a refractive index of the silica fine particles is 1.46, and a refractive index of the acrylic resin fine particles is 1.49, and therefore an apparent refractive index of the anti-glare layer formed this time is considered to be a value between 1.46 and 1.52.

**• Formation of anti-reflection layer**

Photocurable and low refractive index resin composition (coating liquid) G was applied onto a surface on which the anti-glare layer of the base material was formed, by using a bar coater to be 90 to 100 nm in an average film thickness after drying, and then dried at a temperature of 85°C for 1 minute in an oven. Then, the resulting material was photocured, under a nitrogen atmosphere, at an irradiation amount of 300 mJ/cm$^2$ by using a high pressure mercury lamp to form an anti-reflection layer. A refractive index (at 589 nm) of the anti-reflection layer was 1.35.

**Comparative Example 1**

An anti-glare film was prepared in a manner similar to Example 1 except that an anti-reflection layer was not formed.

**Comparative Example 2**

An anti-glare anti-reflection hard coating film was obtained in a manner similar to Example 1 except that the coating liquid was coated to be 1 to 2 $\mu$m in an average film thickness after drying when an anti-glare layer was formed.

**Example 2**

An anti-glare layer and an anti-reflection layer were formed in a manner similar to Example 1 except that photocurable resin composition (coating liquid) B was used when the anti-glare layer was formed.

**Comparative Example 3**

An anti-glare film was prepared in a manner similar to Example 2 except that an anti-reflection layer was not formed.

**Comparative Example 4**

An anti-glare layer and an anti-reflection layer were formed in a manner similar to Example 1 except that photocurable resin composition (coating liquid) C was used when the anti-glare layer was formed.

**Comparative Example 5**

An anti-glare layer and an anti-reflection layer were formed in a manner similar to Example 1 except that photocurable resin composition (coating liquid) D was used when the anti-glare layer was formed.

**Comparative Example 6**

An anti-glare layer and an anti-reflection layer were formed in a manner similar to Example 1 except that photocurable resin composition (coating liquid) E was used when the anti-glare layer was formed.

**Comparative Example 7**

An anti-glare layer and an anti-reflection layer were formed in a manner similar to Example 1 except that photocurable resin composition (coating liquid) F was used when the anti-glare layer was formed.
Compositions in Examples 1 to 2 and Comparative Examples 1 to 7 are shown in Table 3. Measurement results of various values of physical properties were also shown together therewith. In addition, a blending ratio of the fine particles was adjusted to be 2 to 10% in haze after preparing the anti-glare anti-reflection hard coating film.

**Table 2**

Table 2 Compositions and values of physical properties in Examples 1 to 2 and Comparative Examples 1 to 7

| | | Example 1 | Comparative Example 1 | Comparative Example 2 | Example 2 | Comparative Example 3 | Comparative Example 4 | Comparative Example 5 | Comparative Example 6 | Comparative Example 7 |
|---|---|---|---|---|---|---|---|---|---|---|
| Fine particle kind | | Silica | | | | | | | Acrylic | None |
| Fine particle shape | | Amorphous | | | | | | | Spherical | - |
| Volume average particle size | μm | 0.6 | | | | | 1.2 | 0.5 | 0.5 | - |
| Fine particles in anti-glare layer | wt% | 20.9 | | | 19.2 | | 15.3 | 14.4 | 14.4 | 0 |
| Anti-glare layer film thickness | μm | 4.6 | 4.2 | 1.6 | 4.7 | 4.3 | 4.4 | 4.5 | 5.2 | 5.1 |
| Anti-reflection layer film thickness | nm | 95 | - | 94 | 95 | - | 95 | 96 | 90 | 95 |
| Luminous reflectance | % | 1.0 | 2.0 | 0.8 | 0.9 | 3.4 | 1.1 | 0.8 | 1.2 | 0.6 |
| Total luminous transmittance | % | 93.1 | 90.7 | 92.4 | 93.6 | 90.8 | 92.6 | 93.7 | 93.0 | 94.4 |
| Haze | % | 6 | 13 | 28 | 3 | 5 | 8 | 8 | 5 | 0.7 |
| Gloss (60°) | % | 38 | 48 | 22 | 43 | 68 | 42 | 48 | 43 | 46 |
| Ra of anti-glare layer | μm | 0.070 | 0.070 | 0.13 | 0.054 | 0..054 | 0.10 | 0.003 | 0.12 | 0.003 |
| Ra of anti-reflection layer | μm | 0.064 | - | 0.13 | 0.043 | - | 0.092 | 0.003 | 0.10 | 0.002 |

(continued)

| | | Example 1 | Comparative Example 1 | Comparative Example 2 | Example 2 | Comparative Example 3 | Comparative Example 4 | Comparative Example 5 | Comparative Example 6 | Comparative Example 7 |
|---|---|---|---|---|---|---|---|---|---|---|
| Pencil hardness | | 3H | 2H | 2H | 3H | 3H | 3H | 3H | 3H | 2H |
| Glare | | Good | Good | Poor | Good | Good | Poor | Excellent. | Poor | Excellent. |
| Reflected glare | | Excellent | Good | Excellent. | Good | Marginal | Excellent. | Poor | Excellent. | Poor |
| Glare of external light | | Excellent | Good | Excellent. | Excellent | Poor | Excellent. | Marginal | Marginal | Good |
| Cloudiness feeling | | Good | Poor | Poor | Excellent | Marginal | Marginal | Excellent. | Good | Excellent. |

Comparison of Example 1 with Comparative Example 1, and comparison of Example 2 with Comparative Example 3 show that reflected glare is suppressed by providing the anti-reflection layer, and simultaneously the cloudiness feeling is also reduced. Moreover, the pencil hardness in Example 1 is larger than in Comparative Example 1. The anti-reflection layer is significantly thin, and therefore hardly contributes to hardness of the coating film. However, the anti-reflection layer is composed of a fluorine-based resin, whereby a surface thereof is formed to be slippery, resulting in difficulty in causing scratching.

Comparison of Example 1 with Comparative Example 2 shows that the pencil hardness is increased by increasing the film thickness of the anti-glare layer to 3 $\mu$m or more.

Comparison of Examples 1 and 2 with Comparative Example 4 shows that the volume average particle size of amorphous silica is adjusted to a level within the range of 0.3 to 0.9 $\mu$m to obtain an effect of suppressing glare and simultaneously preventing reflected glare even in a high-definition screen.

Comparison of Examples 1 and 2 with Comparative Example 5 shows that amorphous silica (volume average particle size: 0.3 to 0.9 $\mu$m) is used instead of spherical silica to obtain a balanced effect between suppression of glare and prevention of reflected glare even in the high-definition screen.

Comparison of Examples 1 and 2 with Comparative Example 6 shows that amorphous silica (volume average particle size: 0.3 to 0.9 $\mu$m) is used instead of the acrylic resin fine particles to obtain a balanced effect between suppression of glare and prevention of reflected glare even in the high-definition screen.

Comparison of Examples 1 and 2 with Comparative Examples 5 and 7 shows that, if arithmetic average roughness Ra of the anti-glare layer and the anti-reflection layer is small, a sufficient effect of preventing reflected glare is unable to be obtained. Moreover, comparison of Examples 1 and 2 with Comparative Examples 2, 4 and 6 shows that, if arithmetic average roughness Ra of the anti-glare layer and the anti-reflection layer is large, the sufficient effect of suppression of glare is unable to be obtained.

Publications cited herein, all of the references, including patent applications and patents, individually and specifically indicated to each document, and incorporated by reference, and forth in its entirety herein in the same extent, incorporated by reference herein.

Use of the noun and the similar directive used in connection with the description (particularly with reference to the following claims) in the present invention, or particularly pointed out herein, unless otherwise indicated herein or otherwise clearly contradicted by context, is to be construed to cover both the singular form and the plural form. The terms "comprising," "having," "including" and "containing, " unless otherwise noted, be construed as open-ended terms (namely, meaning "including, but not limited to"). Recitations of numerical ranges herein, unless otherwise indicated herein, is intended merely to serve as shorthand for referring individually each value falling within its scope and which, each value, as if it were individually recited herein, are incorporated herein. All of the methods described herein, or particularly pointed out herein, unless otherwise indicated herein or otherwise clearly contradicted by context, can be performed in any suitable order. The use of any and all examples, or exemplary language ("such as") provided herein, is intended merely to better illuminate the invention and does not pose a limitation on the scope of the invention unless otherwise claimed. No language herein should be construed as indicating any non-claimed element as essential to the practice of the invention.

Preferred embodiments of the invention are described herein, including the best modes known to the present inventors for carrying out the invention. Variations of the preferred embodiments may become apparent to those having ordinary skill in the art upon reading the foregoing description. The present inventors expect skilled artisans to employ such variations as appropriate, and the present inventors intend for the invention to be practiced otherwise than as specifically described herein. Accordingly, the invention includes all modifications and equivalents of the subject matters recited in the claims appended hereto as permitted by applicable laws. Further, particularly pointed out herein, unless otherwise indicated or otherwise clearly contradicted by context, any combination of the above-described elements in all possible variations thereof is encompassed by the invention.

**Reference Signs List**

1    Anti-glare anti-reflection hard coating film
2    Image display device
10    Base material
11    Anti-reflection layer
12    Anti-glare layer
13    Window frame
14    Image panel

**Claims**

1. An anti-glare anti-reflection hard coating film, comprising:

   a transparent film-shaped base material; and
   one anti-glare layer and one anti-reflection layer in the order thereof from a side of the base material on one surface side of the base material; wherein
   a thickness of the anti-glare layer is 3 to 15 micrometers,
   a thickness of the anti-reflection layer is 50 to 150 nanometers,
   the anti-glare layer is a cured material prepared by curing a resin composition containing an activated energy ray-curable resin, and
   the resin composition contains silica particles having a volume average particle size of 0.3 to 0.9 micrometer.

2. The anti-glare anti-reflection hard coating film according to claim 1, wherein
   the silica particles are amorphous silica particles, and contained in 10% by weight to 50% by weight in the anti-glare layer,
   haze is 2% to 20%, and
   luminous reflectance in a wavelength region of 380 nanometers to 780 nanometers is 2.0% or less.

3. The anti-glare anti-reflection hard coating film according to claim 1 or 2, wherein
   arithmetic average roughness of a surface after forming the anti-glare layer is 0.02 to 0.1 micrometer,
   arithmetic average roughness of a surface after forming the anti-reflection layer is 0.02 to 0.1 micrometer, and
   the arithmetic average roughness of the surface after forming the anti-reflection layer is 60% or more of the arithmetic average roughness of the surface after forming the anti-glare layer.

4. The anti-glare anti-reflection hard coating film according to any one of claims 1 to 3, wherein
   the anti-reflection layer comprises a fluorine-based resin and metal oxide fine particles having a volume average particle size of 5 to 70 nanometers and bonded with an organic compound having a polymerizable unsaturated group, and a refractive index is 1.25 to 1.38.

5. The anti-glare anti-reflection hard coating film according to any one of claims 1 to 4, comprising:
   a printable layer on the other surface side of the base material.

6. The anti-glare anti-reflection hard coating film according to any one of claims 1 to 5, comprising:
   a sticky layer on the other surface side of the base material.

7. An image display device, comprising:
   the anti-glare anti-reflection hard coating film according to any one of claims 1 to 6 on a surface.

8. A method for producing an anti-glare anti-reflection hard coating film in which an anti-glare layer and an anti-reflection layer are laminated on a transparent film-shaped base material, wherein the method comprises:

   a step of applying a coating liquid containing a curable resin for forming the anti-glare layer onto one surface side of a transparent film-shaped base material to form a coating film and curing the coating film to laminate the anti-glare layer; and
   a step of applying a coating liquid containing a curable resin for forming the anti-reflection layer onto the anti-glare layer to form a coating film and curing the coating film to laminate the anti-reflection layer,
   the anti-reflection layer is cured by being irradiated with ultraviolet light under an atmosphere of an oxygen concentration of 5% or less,
   a thickness of the anti-glare layer is 3 to 15 micrometers, and
   a thickness of the anti-reflection layer is 50 to 150 nanometers,
   the coating liquid of the anti-glare layer has a resin composition containing an activated energy ray-curable resin, and
   the resin composition contains silica particles having a volume average particle size of 0.3 to 0.9 micrometer.

Fig. 1

Fig. 2

Fig. 3

(a)                                    (b)

Fig. 4

## INTERNATIONAL SEARCH REPORT

| International application No. |
| --- |
| PCT/JP2017/035359 |

**A. CLASSIFICATION OF SUBJECT MATTER**

Int.Cl. G02B1/14(2015.01)i, B32B7/02(2006.01)i, B32B27/20(2006.01)i,
G02B1/111(2015.01)i, G02B5/02(2006.01)i

According to International Patent Classification (IPC) or to both national classification and IPC

**B. FIELDS SEARCHED**

Minimum documentation searched (classification system followed by classification symbols)
Int.Cl. G02B1/10-1/18, G02B5/00-5/136

Documentation searched other than minimum documentation to the extent that such documents are included in the fields searched
Published examined utility model applications of Japan      1922-1996
Published unexamined utility model applications of Japan    1971-2017
Registered utility model specifications of Japan            1996-2017
Published registered utility model specifications of Japan  1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2008-203836 A (DAINIPPON PRINTING CO., LTD.) 04 September 2008, paragraphs [0001], [0006], [0011]-[0023], [0027]-[0041], [0053]-[0073], [0094], [0102], [0109], [0113] & US 2009/0015926 A1 (See paragraphs [0001], [0007], [0020]-[0037], [0042]-[0061], [0077]-[0099], [0135], [0154]-[0162], [0168], [0171]) | 1, 4-8<br>2-3 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 December 2017 (13.12.2017) | 26 December 2017 (26.12.2017) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2017/035359

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-103734 A (FUJIFILM CORP.) 14 May 2009, paragraphs [0015]-[0027], [0073], [0090]-[0091] (Family: none) | 1, 4-8 |
| A | | 2-3 |
| Y | WO 2013/002406 A1 (JNC CORPORATION) 03 January 2013, paragraphs [0021], [0074], [0086] & US 2014/0141223 A1 (See paragraph [0139]) & CN 103635316 A & KR 10-2014-0050638 A & TW 201307064 A | 5 |
| A | JP 2002-154183 A (JSR CORP.) 28 May 2002, paragraphs [0001], [0018]-[0020], [0073] (Family: none) | 1-8 |
| A | WO 2006/038481 A1 (NITTO DENKO CORP.) 13 April 2006, paragraphs [0030], [0042]-[0045], [0149] & US 2007/0178297 A1 (See paragraphs [0031], [0042]-[0045], [0154]) & KR 10-2006-0071407 A & CN 1906235 A & TW 200628523 A | 1-8 |
| A | JP 2016-122140 A (NOF CORPORATION) 07 July 2016, paragraphs [0017]-[0037], [0090]-[0095] (Family: none) | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9269403 A
- JP 2006048025 A
- JP 2009103734 A
- JP 2002036452 A
- JP 2016194444 A

**Non-patent literature cited in the description**

- **ATSUSHI MOROHOSHI.** Fumed silica. NIPPON AEROSIL CO., LTD, 2008
- Kakushu filler no kozo, spekku, kino (data shu) in Japanese. TECHNICAL INFORMATION INSTITUTE CO., LTD, 100